# EUROPÄISCHE PATENTSCHRIFT

(11) **EP 0 724 062 B1**
(45) Veröffentlichungstag und Bekanntmachung des Hinweises auf die Patenterteilung: **13.12.2000**
(21) Anmeldenummer: 96100239.1
(22) Anmeldetag: 10.01.1996
(51) Int. Cl.: E06B 5/16

(54) **Brandschutzverglasung**
Fireproof glazing
Vitrage pare-feu

(30) Priorität: 27.01.1995 DE 29501246 U
(43) Veröffentlichungstag der Anmeldung: 31.07.1996
(73) Patentinhaber: PROMAT GmbH, 40880 Ratingen (DE); Holzbau Schmid GmbH & Co. KG, 73099 Adelberg (DE)
(72) Erfinder: Tente, Ulrich, D-40699 Erkrath (DE); Schmid, Claus, D-73099 Adelberg (DE)
(74) Vertreter: Stenger, Watzke & Ring Patentanwälte

(56) Entgegenhaltungen:
- DE-A- 3 413 324
- DE-A- 4 421 210
- DE-C- 4 001 677
- DE-U- 29 501 246
- GB-A- 2 195 386

## Beschreibung

Die Erfindung betrifft eine Brandschutzverglasung zur Vermeidung des Durchtritts von Feuer und Rauch im Brandfall aus einem Raum in einen anderen, mit mindestens zwei einen Schutzwirkstoff enthaltenden Brandschutzscheiben, deren Stirnflächen einander zugewandt sind,
mit einer die Brandschutzscheiben einfassenden und haltenden Rahmenkonstruktion,
mit mindestens einer einen Teil der Rahmenkonstruktion bildenden Leiste aus einem nicht brennbaren bzw. schwer entflammbaren Material, welche sich zwischen den einander zugewandten Stirnflächen erstreckt,
und mit Holzelementen, die einen anderen Teil der Rahmenkonstruktion bilden und Abschnitte aufweisen, welche sich bis über die Ränder der Flachseiten der Brandschutzscheiben erstrecken und diese abdecken.

Brandschutzverglasungen verwenden Brandschutzscheiben, die mehrlagig aus Glasscheiben mit einer jeweils dazwischen angeordneten Brandschutzschicht aufgebaut sind. Im Brandfall wird diese Brandschutzschicht aktiviert, wobei sie Wärmestrahlung absorbiert und eine hochwirksame Dämmschicht bildet. Aus der ursprünglich transparenten Verglasung entsteht dabei eine praktisch undurchsichtige Feuerschutzwand. Brandschutzscheiben werden in Rahmen befestigt, die hinsichtlich ihrer Größe und ihrer brandschutztechnischen Eigenschaften auf die verwendeten Glasscheiben abgestimmt sein müssen.

Bekannt ist eine Brandschutzverglasung mit zweiteiliger Stahlrahmenkonstruktion, bei der der Raum zwischen den Stirnflächen zweier aneinandergrenzender Brandschutzscheiben durch eine Leiste aus nicht brennbarem bzw. schwer entflammbarem Material gefüllt ist. Auf diese Weise wird ein Wärmedurchgang durch die besonders gefährdete Stoßstelle zwischen aneinander grenzenden Brandschutzscheiben verhindert. Zur Gewährleistung der erforderlichen mechanischen Stabilität sind beiderseits der Leiste Stahlprofile angeordnet. Bei der Erstellung der Rahmenkonstruktion werden diese Stahlprofile miteinander verschraubt. Diese Brandschutzverglasung kann hinsichtlich der Brandschutzanforderungen in jeder Hinsicht befriedigen, jedoch unterliegt die gestalterische Freiheit der Rahmenkonstruktion wegen der Verwendung weitgehend genormter Stahlprofile engen Grenzen.

Aus der GB-A 2 195 386 ist eine Brandschutzverglasung mit einer Rahmenkonstruktion aus beidseits der Brandschutzscheiben angeordneten Holzprofilen bekannt, wobei die Holzprofile über einen Stahlträger miteinander verbunden sind, der den Freiraum zwischen den Brandschutzscheiben durchkreuzt. Der Stahlträger ist in etwa T-förmig gestaltet mit einem kurzen und einem langen Schenkel. Während der kurze Schenkel an einer Innenfläche des einen Holzprofils anliegt, erstreckt sich der lange Schenkel bis in einen Schlitz des anderen Holzprofils. Dort ist der lange Schenkel mittels mehrerer Schrauben gesichert, die aus dem Holzprofil herausführen. Zusammen mit den Schrauben bildet der Stahlträger eine Hitzebrücke, über die im Brandfall Hitze nahezu ohne Hindernisse von der einen auf die andere Seite der Brandschutzverglasung gelangen kann. Von Nachteil ist auch die aufwendige Montage dieser Brandschutzverglasung. Zunächst muß die vollständige Rahmenkonstruktion einschließlich der beiden Holzprofile und dem diese verbindenden und mittels der Schrauben gesicherten Stahlträger erstellt werden. Erst dann lassen sich die Brandschutzscheiben in die beiderseits des Stahlträgers gebildeten Nuten einsetzen. Aufgrund dieser konstruktiven Gegebenheiten lassen sich jedoch Montage und Befestigung des anderen Randes der Brandschutzscheibe nicht in gleicher Weise durchführen.

Der Erfindung liegt die **Aufgabe** zugrunde, eine Brandschutzverglasung zur Vermeidung des Durchtritts von Feuer und Rauch im Brandfall aus einem Raum in einen anderen zu schaffen, die sich mit wenig Aufwand montieren läßt, ohne daß wegen der Verwendung des Werkstoffes Holz Abstriche bei der Qualität des Brandschutzes notwendig werden.

Zur **Lösung** dieser Aufgabe wird bei einer Brandschutzverglasung der eingangs genannten Art vorgeschlagen, daß sich die Leiste innerhalb des durch die einander zugewandten Stirnflächen der Brandschutzscheiben definierten Raumes erstreckt, daß Bestandteil der Holzelemente rechteckige Holzprofile sind, die flächig an der Leiste anliegen und deren Breite geringer ist als die Breite der Rahmenkonstruktion, und daß Holzleisten an den den Brandschutzscheiben zugewandten Stirnflächen der Holzprofile befestigt sind, die die Ränder der Flachseiten der Brandschutzscheiben abdecken und die Brandschutzscheiben halten.

Die erfindungsgemäße Brandschutzverglasung bildet durch die zwischen den Stirnflächen der Brandschutzscheiben angeordnete Leiste aus nicht brennbarem bzw. schwer entflammbarem Material eine wirksame Barriere gegen Feuer und Hitze. Durch die Verwendung von Holzelementen für die Rahmenkonstruktion wird dem Rahmenbauer ein Höchstmaß an gestalterischer Freiheit ermöglicht, ohne daß Abstriche bei der Qualität des Brandschutzes erforderlich sind. Denn es ist für einen wirksamen Brandschutz nicht erforderlich, die Rahmenkonstruktion aus Profilen aus dem Werkstoff Stahl aufzubauen. Vielmehr ist Holz, obwohl es ein brennbarer Werkstoff ist, hierfür ebenso geeignet. Gegenüber Rahmenelementen aus Stahl weist Holz allerdings den großen Vorteil auf, sehr viel freier gestaltbar zu sein. Dies ist insbesondere dort von Bedeutung, wo die Brandschutzverglasung an die räumlich-gestalterischen Gegebenheiten der Umgebung angepaßt werden muß. Die Holzleisten dienen als Glashalteleisten und lassen sich nach ästhetischen Gesichtspunkten weitgehend frei gestalten.

Gemäß der bevorzugten Weiterbildung der Brandschutzverglasung ist die Dicke der Leiste aus nicht brennbarem bzw. schwer entflammbarem Material geringer als die Dicke der Brandschutzscheiben, und die Holzelemente weisen nach innen zu der Leiste hin gerichtete Abschnitte auf, deren Breite im wesentlichen gleich der Breite der Leiste, jedoch geringer als die Breite der Rahmenkonstruktion ist.

Mit der Erfindung wird ferner vorgeschlagen, daß sich die Leiste aus nicht brennbarem bzw. schwer entflammbarem Material aus zwei flach aneinanderliegenden Streifen zusammensetzt. In diesem Fall kann jeder der beiden Streifen mit dem jeweils angrenzenden Holzelement verschraubt sein, wobei die Köpfe der verwendeten Befestigungsmittel in der Trennebene zwischen den beiden Streifen liegen. Auf diese Weise ist eine Vorbereitung der aus einem Streifen und dem Holzelement bestehenden Baueinheit möglich, so daß eine entsprechende Rahmenkonstruktion sehr schnell erstellt werden kann.

Mit der Erfindung werden ferner zusätzliche Befestigungsmittel vorgeschlagen, welche zugleich beide Streifen und mindestens eines der Holzelemente durchdringen und miteinander verbinden.

Zur weiteren Erhöhung des Brandschutzes wird schließlich ein schmaler Streifen aus einem unter Hitzeeinwirkung aufschäumenden Material zwischen der Leiste bzw. den Streifen und der Stirnfläche der jeweils angrenzenden Brandschutzscheibe vorgeschlagen.

Ein Ausführungsbeispiel einer erfindungsgemäßen Brandschutzverglasung wird nachfolgend anhand der Zeichnung beschrieben. Darin zeigen:
- Fig. 1: in einer Ansicht eine erfindungsgemäße Brandschutzverglasung und
- Fig. 2: einen Teilschnitt entlang der Linie A-A der Figur 1.

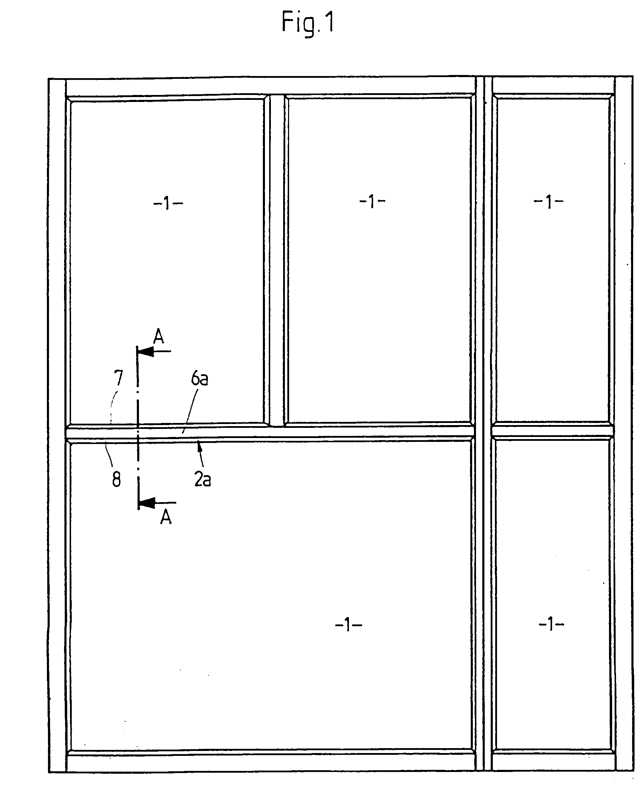

Die in Figur 1 dargestellte Brandschutzverglasung besteht aus mehreren Glasflächen, die durch in eine Rahmenkonstruktion eingesetzte Brandschutzscheiben 1 gebildet werden. Die Brandschutzscheiben 1 bestehen aus einem Spezialverbundglas, welches aus mehreren Glasscheiben mit dazwischen angeordneten Brandschutzschichten mit einem Schutzwirkstoff besteht. Im Brandfall wird der Schutzwirkstoff aktiviert, wobei die Brandschutzscheiben Wärmestrahlung absorbieren und so eine wirksame Dämmschicht bilden, welche den Durchgang von Feuer und Rauch verhindert. Die Aktivierung der Brandschutzschichten führt im Brandfall ferner dazu, daß diese aufschäumen und eine Trübung annehmen, so daß eine praktisch undurchsichtige Feuerschutzwand entsteht.

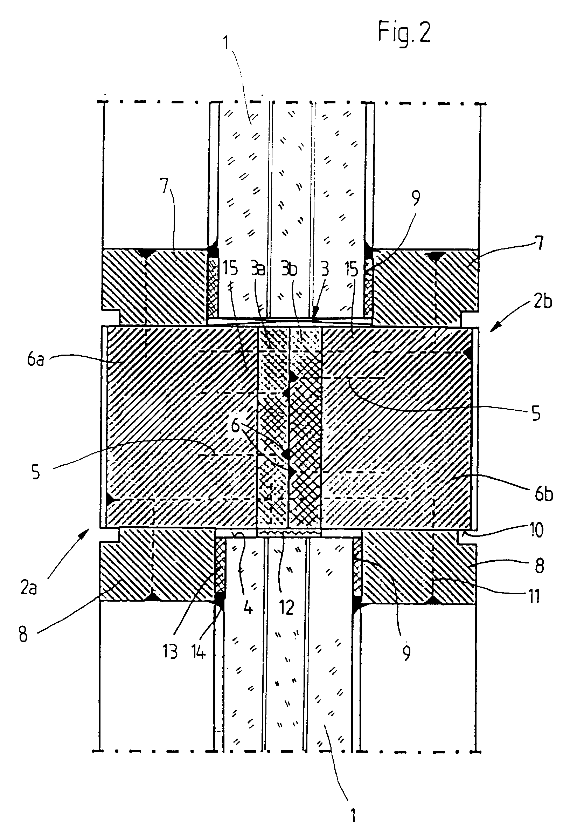

Der Verbindungsbereich zweier Brandschutzscheiben 1 ist in Figur 2 im Schnitt dargestellt. Zur Anwendung gelangt eine Rahmenkonstruktion, die sich aus zwei Holzelementen 2a, 2b mit einer dazwischen angeordneten Leiste 3 aus einem nicht brennbaren bzw. schwer entflammbaren Material zusammensetzt. Die Leiste 3 ist zweigeteilt, und besteht aus zwei flach aneinanderliegenden Streifen 3a, 3b, die sich zwischen den einander zugewandten Stirnflächen 4 der Brandschutzscheiben 1 erstrecken. Figur 2 läßt erkennen, daß beide Streifen 3a, 3b zusammen eine geringere Dicke aufweisen, als die Dicke der Brandschutzscheibe 1.

Jeder der beiden Streifen, 3a, 3b der Leiste 3 aus nicht brennbarem bzw. schwer entflammbarem Material ist jeweils mit dem anliegenden Holzelement 2a bzw. 2b verklammert. Hierzu greifen Klammern 5, deren Köpfe 6 in der Trennebene zwischen den beiden Streifen 3a, 3b liegen, bis in ein an dem jeweiligen Streifen 3a bzw. 3b anliegendes Holzprofil 6a bzw. 6b von rechteckigem Querschnitt. Weitere, jedoch längere Klammern durchragen ein Holzprofil sowie beide Streifen 3a, 3b, und greifen bis in das jeweils andere Holzprofil ein.

Jedes der beiden Holzelemente 2a, 2b besteht außer aus dem rechteckigen Holzprofil 6a, 6b noch aus jeweils zwei Holzleisten 7, 8. Die Holzleisten 7, 8 decken den anliegenden Rand 9 der Brandschutzscheibe 1 ab und sind hierzu mittels weiterer Klammern 11 an den den Brandschutzscheiben 1 zugewandten Stirnflächen 10 der Holzprofile 6a, 6b befestigt. Sowohl die Holzprofile 6a, 6b, als auch die als Glashalteleisten dienenden Holzleisten 7, 8 können innerhalb gewisser Grenzen frei gestaltet werden, um so die Rahmenkonstruktion unter ästhetischen Gesichtspunkten zu beeinflussen. Als Holz kommt überwiegend Laubholz, jedoch, je nach Anwendungsfall, auch Nadelholz zur Anwendung. Die Art des verwendeten Holzes hat nur einen geringen Einfluß auf den erzielbaren Feuer- und Hitzewiderstand der Rahmenkonstruktion. Entscheidend hierfür ist nahezu ausschließlich die Wirkung der zwischen den Holzprofilen 6a, 6b angeordneten Leiste 3. Um Hitzebrücken im Bereich der Stoßflächen zwischen Leiste 3 und Brandschutzscheiben 1 zu vermeiden, ist dort ein schmaler Streifen 12 aus einem speziellen Brandschutzmaterial angeordnet. Unter Hitzeeinwirkung schäumt der Streifen 12 auf und verschließt somit die verbliebene Fuge.

Die Haltewirkung der Holzleisten 7, 8 wird verbessert, indem zwischen deren Innenseite und dem Rand 9 der Brandschutzscheibe 1 ein Elastozellband 13 angeordnet ist. Eine Silikondichtung 14 verhindert das Eindringen von Staub und Feuchtigkeit.

### Bezugszeichenliste

- 1: Brandschutzscheibe
- 2a: Holzelement
- 2b: Holzelement
- 3: Leiste aus nicht brennbarem bzw. schwer entflammbarem Material
- 3a: Streifen
- 3b: Streifen
- 4: Stirnfläche der Brandschutzscheibe
- 5: Klammer
- 6: Kopf
- 6a: Holzprofil
- 6b: Holzprofil
- 7: Holzleiste
- 8: Holzleiste
- 9: Rand der Brandschutzscheibe
- 10: Stirnfläche
- 11: Klammer
- 12: Streifen
- 13: Elastozellband
- 14: Silikondichtung
- 15: Abschnitt

## Patentansprüche

1. Brandschutzverglasung zur Vermeidung des Durchtritts von Feuer und Rauch im Brandfall aus einem Raum in einen anderen, mit mindestens zwei einen Schutzwirkstoff enthaltenden Brandschutzscheiben (1), deren Stirnflächen (4) einander zugewandt sind,
mit einer die Brandschutzscheiben (1) einfassenden und haltenden Rahmenkonstruktion,
mit mindestens einer einen Teil der Rahmenkonstruktion bildenden Leiste (3) aus einem nicht brennbaren bzw. schwer entflammbaren Material, welche sich zwischen den einander zugewandten Stirnflächen (4) erstreckt,
und mit Holzelementen (2a, 2b), die einen anderen Teil der Rahmenkonstruktion bilden und Abschnitte aufweisen, welche sich bis über die Ränder (9) der Flachseiten der Brandschutzscheiben (1) erstrecken und diese abdecken,
**dadurch gekennzeichnet,**
daß sich die Leiste (3) innerhalb des durch die einander zugewandten Stirnflächen (4) der Brandschutzscheiben (1) definierten Raumes erstreckt, daß Bestandteil der Holzelemente (2a, 2b) rechteckige Holzprofile (6a, 6b) sind, die flächig an der Leiste (3) anliegen und deren Breite geringer ist als die Breite der Rahmenkonstruktion, und daß Holzleisten (7, 8) an den den Brandschutzscheiben (1) zugewandten Stirnflächen (10) der Holzprofile (6a, 6b) befestigt sind, die die Ränder (9) der Flachseiten der Brandschutzscheiben (1) abdecken und die Brandschutzscheiben (1) halten.

2. Brandschutzverglasung nach Anspruch 1, dadurch gekennzeichnet, daß die Dicke der Leiste (3) aus nicht brennbarem bzw. schwer entflammbarem Material geringer ist als die Dicke der Brandschutzscheiben (1), und die Holzprofile (6a, 6b) nach innen zu der Leiste (3) hin gerichtete Abschnitte (15) aufweisen, deren Breite im wesentlichen gleich der Breite der Leiste (3), jedoch geringer als die Breite der Rahmenkonstruktion ist.

3. Brandschutzverglasung nach Anspruch 1 oder 2, dadurch gekennzeichnet, daß sich die Leiste (3) aus nicht brennbarem bzw. schwer entflammbarem Material aus zwei flach aneinanderliegenden Streifen (3a, 3b) zusammensetzt.

4. Brandschutzverglasung nach Anspruch 3, dadurch gekennzeichnet, daß jeder der beiden Streifen (3a, 3b) mit dem jeweils angrenzenden Holzelement (2a bzw. 2b) verschraubt ist, wobei die Köpfe (6) der verwendeten Befestigungsmittel (5) in der Trennebene zwischen den beiden Streifen (3a, 3b) liegen.

5. Brandschutzverglasung nach Anspruch 4, gekennzeichnet durch zusätzliche Befestigungsmittel, welche zugleich beiden Streifen (3a, 3b) und mindestens eines der Holzelemente (2a, 2b) durchdringen und miteinander verbinden.

6. Brandschutzverglasung nach einem der Ansprüche 1 bis 5, gekennzeichnet durch schmale Streifen (12) aus einem unter Hitzeeinwirkung aufschäumenden Material zwischen der Leiste (3) bzw. den Streifen (3a, 3b) und der Stirnfläche (4) der jeweils angrenzenden Brandschutzscheibe (1).

## Claims

1. Fireproof glazing for preventing fire and smoke from passing from one room into another in the event of a fire, with at least two fireproof panes (1) which contain a protective active substance and the end faces (4) of which confront one another, with a frame structure surrounding and holding the fireproof panes (1), with at least one batten (3) which forms one part of the frame structure and consists of non-combustible or low-inflammable material and which extends between the end faces (4) confronting one another, and with wooden elements (2a, 2b) which form another part of the frame structure and have portions which extend beyond the edges (9) of the flat sides of the fireproof panes (1) and cover these, characterized in that the batten (3) extends within the space defined by those end faces (4) of the fireproof panes (1) which confront one another, in that an integral part of the wooden elements (2a, 2b) is rectangular wooden profiles (6a, 6b) which bear over their area on the batten (3) and the width of which is smaller than the width of the frame structure, and in that wooden battens (7, 8) are fastened to those end faces (10) of the wooden profiles (6a, 6b) which confront the fireproof panes (1), the said wooden battens covering the edges (9) of the flat sides of the fireproof panes (1) and holding the fireproof panes (1).

2. Fireproof glazing according to Claim 1, characterized in that the thickness of the batten (3) consisting of non-combustible or low-inflammable material is smaller than the thickness of the fireproof panes (1), and the wooden profiles (6a, 6b) have portions (15) which are directed inwards towards the batten (3) and the width of which is essentially equal to the width of the batten (3), but smaller than the width of the frame structure.

3. Fireproof glazing according to Claim 1 or 2, characterized in that the batten (3) consisting of non-combustible or low-inflammable material is composed of two strips (3a, 3b) resting flat against one another.

4. Fireproof glazing according to Claim 3, characterized in that each of the two strips (3a, 3b) is screwed to the respectively adjacent wooden element (2a or 2b), the heads (6) of the fastening means (5) used lying in the parting plane between the two strips (3a, 3b).

5. Fireproof glazing according to Claim 4, characterized by additional fastening means which at the same time pass through the two strips (3a, 3b) and at least one of the wooden elements (2a, 2b) and connect them to one another.

6. Fireproof glazing according to one of Claims 1 to 5, characterized by narrow strips (12) consisting of a material which expands under the effect of heat, between the batten (3) or the strips (3a, 3b) and the end face (4) of the respectively adjacent fireproof pane (1).

## Revendications

1. Vitrage pare-feu pour éviter le passage du feu et de la fumée en cas d'incendie d'une pièce dans une autre, comportant :
au moins deux vitres pare-feu (1) qui contiennent une matière active protectrice et dont les surfaces frontales (4) sont proches l'une de l'autre,
une structure cadre entourant et tenant les vitres pare-feu (1),
au moins une baguette (3) qui forme une partie de la structure cadre, qui est en un matériau ininflammable ou difficilement inflammable et qui s'étend entre les surfaces frontales (4) proches l'une de l'autre,
et des éléments en bois (2a, 2b) qui forment une autre partie de la structure cadre et qui comportent des parties s'étendant jusqu'aux bords (9) des côtés plats des vitres pare-feu (1) et recouvrant ceux-ci,
caractérisé en ce que
la baguette (3) s'étend à l'intérieur de l'espace défini par les surfaces frontales proches l'une de l'autre (4) des vitres pare-feu (1), en ce que des parties des éléments en bois (2a, 2b) sont des profilés en bois rectangulaires (6a, 6b), qui s'appuient avec leur surface contre la baguette (3) et dont la largeur est inférieure à la largeur de la structure cadre, et en ce que des baguettes en bois (7, 8) sont fixées aux surfaces frontales (10), proches des vitres pare-feu (1), des profilés en bois (6a, 6b), recouvrent les bords (9) des côtés plats des vitres pare-feu (1) et tiennent les vitres pare-feu (1).

2. Vitrage pare-feu selon la revendication 1, caractérisé en ce que l'épaisseur de la baguette (3) en un matériau ininflammable ou difficilement inflammable est inférieure à l'épaisseur des vitres pare-feu (1) et en ce que les profilés en bois (6a, 6b) comportent des parties (15) qui sont orientées vers l'intérieur vers la baguette (3) et dont la largeur est sensiblement égale à la largeur de la baguette (3) mais inférieure à la largeur de la structure cadre.

3. Vitrage pare-feu selon la revendication 1 ou 2, caractérisé en ce que la baguette (3) en un matériau ininflammable ou difficilement inflammable est composée de deux bandes (3a, 3b) s'appuyant l'une à l'autre par leur surface plane.

4. Vitrage pare-feu selon la revendication 3, caractérisé en ce que chacune des deux bandes (3a, 3b) est vissée à l'élément en bois (2a ou 2b) respectivement adjacent, les têtes (6) des moyens de fixation (5) utilisés se trouvant dans le plan de séparation entre les deux bandes (3a, 3b).

5. Vitrage pare-feu selon la revendication 4, caractérisé par des moyens de fixation supplémentaires qui traversent en même temps les deux bandes (3a, 3b) et au moins l'un des éléments en bois (2a, 2b) et qui les assemblent les uns aux autres.

6. Vitrage pare-feu selon l'une des revendications 1 à 5, caractérisé par des bandes étroites (12) en un matériau moussant sous l'action de la chaleur entre la baguette (3) ou les bandes (3a, 3b) et la surface frontale (4) de la vitre pare-feu (1) respectivement adjacente.
